# EUROPEAN PATENT APPLICATION

(11) **EP 2 460 664 A1**
(43) Date of publication of application: **06.06.2012**
(21) Application number: 09847737.5
(22) Date of filing: 24.12.2009
(51) Int. Cl.: B41J 29/38, G06F 3/12

(54) **METHOD AND SYSTEM FOR PRINTING DEALING VOUCHER**

(30) Priority: 27.07.2009 CN 200910157767
(71) Applicant: ZTE Corporation, Shenzhen, Guangdong 518057 (CN)
(72) Inventor: LI, Hai, Shenzhen Guangdong 518057 (CN); PAN, Yilong, Shenzhen Guangdong 518057 (CN); YE, Jiansheng, Shenzhen Guangdong 518057 (CN); WANG, Peng, Shenzhen Guangdong 518057 (CN)
(74) Representative: Haverkamp, Jens
(86) International application number: PCT/CN2009/075946
(87) International publication number: WO 2011/011951

(57) **Abstract**

A method for printing a dealing voucher, comprises: a printing format management step, for predefining printing properties, and combining the printing properties to generate a plurality of printing format templates; a dealing association step, for associating the dealing types with the printing format templates; and a printing and outputting step, for calling a printing format template to which the dealing of this time corresponds according to the type of the dealing and an association relationship between the dealing types and the printing format templates, and printing and outputting a dealing voucher. The printing properties comprise common printing properties and the printing properties expanded as required. The printing format management step is further used for modifying or deleting the printing format templates as required. A system for printing a dealing voucher is also disclosed. The method and system can meet the requirements of various different dealing types and automatically select corresponding printing formats for different dealing types.

## Description

### TECHNICAL FIELD

The disclosure relates to the technical field of printing, particularly to a method and a system for printing a dealing voucher.

### BACKGROUND

At present, an existing system for printing a dealing voucher on market can only print dealing vouchers in one format at the same time and has no function for intelligently and automatically selecting printing format. Nowadays, with the service scope, of operators such as Telecom and the like, developed wider, the format of dealing vouchers required by operators is more diverse, so the existing system for printing a single dealing voucher cannot meet the requirements of various types of dealings for different printing formats during dealings.

In the prior art, such pre-cured printing system mainly has the following defects and problems:
1: the printing format is too single to be modified dynamically;
2: the printing formats among different dealing types cannot be matched automatically;
3: the manual input speeds for various dealing data are too slow to meet the requirement of higher efficiency when various services are developed at the same time;
4: a printing template and dealing information cannot be dynamically combined; and
5: manual operation is required due to the low system intelligence.

### SUMMARY

In view of this, the technical problem to be solved by the disclosure is to provide a method and a system for printing a dealing voucher to meet the requirements of various dealing types.

As one aspect of the technical solution of the disclosure, a method for printing a dealing voucher comprises the following steps:
a printing format management step, for generating a plurality of printing format templates and saving the templates;
a dealing association step, for associating dealing types with the printing format templates; and
a printing and outputting step, for calling a printing format template to which the dealing of this time corresponds according to the type of the dealing and an association relationship between the dealing types and the printing format templates, and printing and outputting a dealing voucher.

Furthermore, a method for generating printing format templates in the printing format management step may comprise:
A: defining printing properties; and
B: generating the printing format templates by selecting and combining the printing properties.

Furthermore, the printing properties may comprise common printing properties and printing properties expanded as required.

Furthermore, the printing format management step may be further used for dynamically managing the saved printing format templates as required, i.e., modifying or deleting the saved printing format templates as required.

As another aspect of the technical solution of the disclosure, a system for printing a dealing voucher comprises the following modules:
a printing format management module, which is configured to generate a plurality of printing format templates and save the templates;
a dealing association module, which is configured to associate dealing types with the printing format templates; and
a printing and outputting module, which is configured to call a printing format template to which the dealing of this time corresponds according to the type of the dealing and an association relationship between the dealing types and the printing format templates, and print and output a dealing voucher.

Furthermore, the printing format management module may comprise a format property sub-module, a property selection sub-module and a format management sub-module; wherein
the format property sub-module is configured to define common printing properties, and the format property sub-module may be further configured to expand new printing properties as required;
the property selection sub-module is configured to generate the printing format templates by selecting and combining the printing properties; and
the format management sub-module is configured to save the generated printing format templates.

Furthermore, the format management sub-module may be further configured to dynamically manage the saved printing format templates as required, i.e., modify or delete the saved printing format templates as required.

Furthermore, the dealing association module may comprise a dealing type management sub-module and a type association sub-module; wherein
the dealing type management sub-module is configured to manage the dealing types, comprising adding, deleting and modifying the dealing types; and
the type association sub-module is configured to associate the dealing types with the printing format templates.

The disclosure has the following advantages:
1: operators can define different printing formats according to different dealing types to support different dealing types and facilitate the format management;
2: operators can dynamically regulate various printing formats by simple fields selection according to actual circumstances;
3: operators can freely add new printing formats according to the market demand without modifying the system, thereby avoiding the risks of development and upgrade; and
4: during dealings, the system intelligently selects the printing format to avoid the influence from manual misoperation and greatly improve the working efficiency.

In a word, the method and system for printing a dealing voucher of the disclosure can dynamically regulate the printing formats of various dealing types and intelligently and adaptively print the associated dealing vouchers by less modification in a short time according to actual requirements.

### BRIEF DESCRIPTION OF THE DRAWINGS

Fig. 1 is a diagram illustrating the flow of a method for printing a dealing voucher of the disclosure;
Fig. 2 is a diagram illustrating the flow of a method for printing a dealing voucher of one embodiment of the disclosure; and
Fig. 3 is a diagram illustrating the structure of a system for printing a dealing voucher of one embedment of the disclosure.

### DETAILED DESCRIPTION

The disclosure is further illustrated below in detail with reference to the drawings and embodiments.

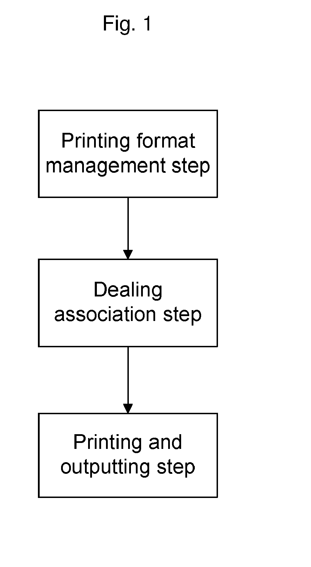

Fig. 1 is a diagram illustrating the flow of a method for printing a dealing voucher of the disclosure. As shown in Fig. 1, the method for printing a dealing voucher of the disclosure specifically comprises the following steps:
a printing format management step, in which common printing properties are defined, and new printing properties are expanded when needed; a plurality of printing format templates are generated and saved by combining the printing properties, and the saved printing format templates are dynamically regulated as required, such as modifying or deleting the printing format templates;
a dealing association step, in which different dealing types are associated with the printing format templates according to the printing requirements of different dealings; and
a printing and outputting step, in which, during a dealing, a printing format template corresponding to this dealing is called according to the type of this dealing which is happenning and an association relationship between the dealing types and the printing format templates, so as to printe and output a dealing voucher.

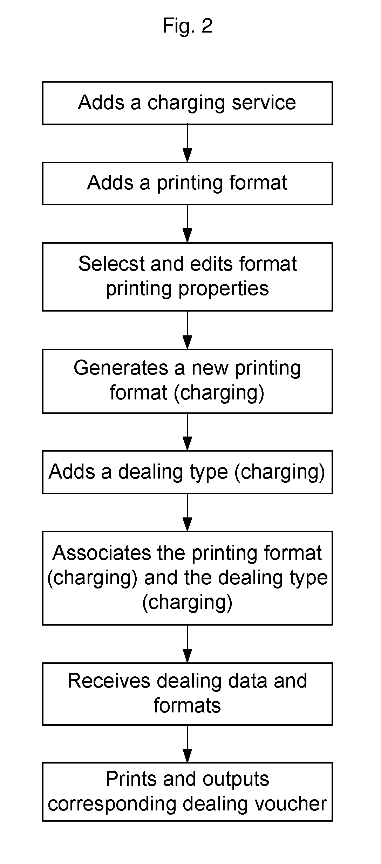

Fig. 2 is a diagram illustrating the flow of a method for printing a dealing voucher of one embodiment of the disclosure. As shown in Fig. 2, taking a subscriber charging at a terminal of an operator as an example, the method specifically comprises the following steps:
1: determining to add a new charging service;
2: needing to add a new printing format (charging);
3: inputting number and name of the printing format, and selecting a basic property corresponding to the printing format (i.e., charging) and optional properties (such as current data, time, a dealing number, a service area name, a contract number, a terminal number and product details), so as to generate a dealing printing format for charging service;
4: inputting a name, number and other information about the dealing type, and generating a new dealing type (charging);
5: associating the dealing type (charging) with the printing format (charging);
6: during the charging dealing, automatically associating, by a printing system, to the corresponding printing format (charging), and generating final printing data and format through combination after performing data extraction and transformation;
7: printing a corresponding dealing voucher according to the generated printing data and format; and
8: if the printing requirement of the charging dealing changes, then finding the corresponding printing format template and accordingly adding or deleting optional property, and saving the template.

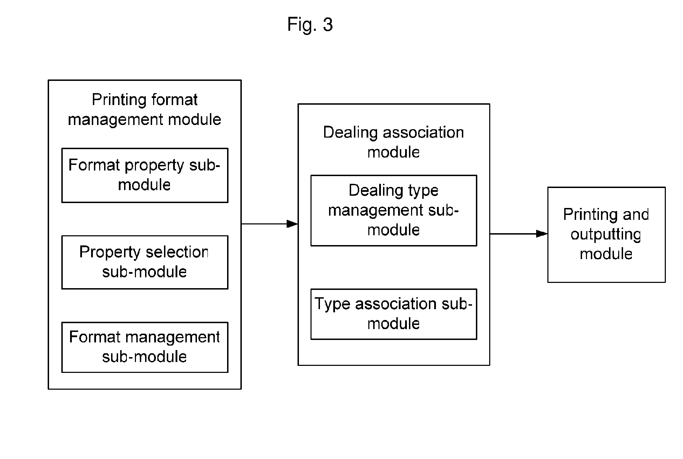

Fig. 3 is a diagram illustrating the structure of a system for printing a dealing voucher of one embedment of the disclosure. As shown in Fig. 3, the system for printing a dealing voucher of the disclosure comprises a printing format management module, a dealing association module and a printing and outputting module. The modules are described below in detail.
1. The printing format management module, which is responsible for editing printing formats. This module further comprises the following sub-modules:
   a format property sub-module, which predefines information about a plurality of commonly-used printing properties, such as dealing time, a dealing serial number, and a dealing amount, and can expand new printing properties as required;
   a property selection sub-module, which generates a printing format template by selecting and combining the printing property required by printing after a dealing happens; and
   a format management sub-module, which is mainly responsible for saving and managing all the generated printing format templates, and can, when there is a printing format need to be modified, finish the operation of printing format modification only by finding the corresponding printing format and adding or deleting properties through the property selection sub-module. The printing formats not used anymore only need to be deleted by the format management sub-module. When deleting a printing format that has been associated with a dealing of a certain type, the format management sub-module can intelligently prompt that the printing format has been associated with the dealing type, thus the printing format cannot be deleted.
2. The dealing association module, which is mainly responsible for associating dealing types with printing formats. This module comprises the following two sub-modules:
   a dealing type management sub-module, which is mainly responsible for adding, deleting and modifying the dealing types; and
   a type association sub-module, which is responsible for associating dealing types with printing formats, that is, configuring a printing format associated with a certain dealing type; the system for printing a dealing voucher can automatically select the printing format according to a dealing type at a dealing terminal, only after configuration by the sub-module, so as to transmit dealing data and the printing format to the printing and outputting module.
3. The printing and outputting module is mainly responsible for printing and outputting the dealing. In case of a dealing, the system for printing a dealing voucher finds the corresponding printing format through the association of the printing format in the type association sub-module according to the type of the dealing, and finds the properties of the printing format in the format management sub-module, and transmits the printing properties and data together to the printing and outputting module which prints the corresponding dealing voucher according to the transmitted information.

As shown in Fig. 3, the flow of printing a dealing voucher by the system for printing a dealing voucher is as follows:
1: determining printing properties of a dealing,
   finding whether the required printing properties are contained by the format property sub-module, and expanding the required printing properties if the required printing properties are not contained in the predefined properties;
2: selecting the printing properties and generating a printing format,
   after the determination of printing properties, selecting the required properties, by entering the property selection sub-module, to generate a new printing format;
3: determining a dealing type,
   when the new printing format is prepared, generating a new dealing type by the dealing type management sub-module;
4: associating the dealing type with the printing format,
   associating the determined dealing type with the printing format by the type association sub-module;
5: printing and outputting,
   in case of a dealing, the system finds corresponding printing format by the type association sub-module according to the type of the dealing, and transmits the printing format and dealing data together to the printing and outputting module to print the required dealing voucher; and
6: modifying the printing format template as required,
   if a printing format needs to be modified to meet a changed requirement, entering the format management sub-module to find the printing format template needed to be modified, and then entering the property selecting sub-module to add, delete or modify the printing properties as required, and saving the operation to achieve the aim of modification.

The system for printing a dealing voucher is convenient to operate, and can configure very flexible printing formats. The system can dynamically configure various required printing formats for results of different dealings in real time, and also can match corresponding printing formats according to respective dealing types, automatically embed dealing data in the printing entries to which the printing formats corresponds and transform into the detailed contents of dealing results and print, thereby effectively overcoming the defect that, the single receipt printing format of operators, such as China Telecom, cannot meet various service requirements during the service. The printing formats of the system are simple to configure, and highly visible, so that the operators only need to select the required property contents, such as dealing time, a dealing serial number, amount and sales clerk and the like, according to their own requirements, and the system combines dealing data with printing formats to generate the required data after generating the printing formats. In case of certain type of dealing, the system automatically selects the configured printing formats according to the dealing types and outputs the data generated in the dealing to a printing terminal to print the corresponding dealing vouchers. The system not only greatly facilitates the management between various dealing services and printing formats, but also avoids the influence from frequent upgrade or format switching.

The detailed embodiments above further explain the aim, technical solution and advantages of the disclosure, however, it should be mentioned that such embodiments are just examples and various changes and derivations of the disclosure can be made by those skilled in the art within the sprit and scope of the disclosure. By doing so, if such modifications and derivations of the disclosure pertain to the scope of the technical solution in the claims and its equivalents, the disclosure is intended to fall within such modifications and derivations.

## Claims

1. A method for printing a dealing voucher, comprising:
a printing format management step, for generating a plurality of printing format templates and saving the templates;
a dealing association step, for associating dealing types with the printing format templates; and
a printing and outputting step, for calling a printing format template to which the dealing of this time corresponds according to the type of the dealing and an association relationship between the dealing types and the printing format templates, and printing and outputting a dealing voucher.

2. The method for printing a dealing voucher according to claim 1, wherein a method for generating printing format templates in the printing format management step comprises:
A: defining printing properties; and
B: generating the printing format templates by selecting and combining the printing properties.

3. The method for printing a dealing voucher according to claim 2, wherein the printing properties comprise common printing properties and printing properties expanded as required.

4. The method for printing a dealing voucher according to claim 1, 2, or 3, wherein the printing format management step is further used for modifying or deleting the saved printing format templates as required.

5. A system for printing a dealing voucher, comprising:
a printing format management module, which is configured to generate a plurality of printing format templates and save the templates;
a dealing association module, which is configured to associate dealing types with the printing format templates; and
a printing and outputting module, which is configured to call a printing format template to which the dealing of this time corresponds according to the type of the dealing and an association relationship between the dealing types and the printing format templates, and print and output a dealing voucher.

6. The system for printing a dealing voucher according to claim 5, wherein the printing format management module comprises a format property sub-module, a property selection sub-module and a format management sub-module; wherein
the format property sub-module is configured to define common printing properties;
the property selection sub-module is configured to generate the printing format templates by selecting and combining the printing properties; and
the format management sub-module is configured to save the generated printing format templates.

7. The system for printing a dealing voucher according to claim 6, wherein the format property sub-module is further configured to expand new printing properties as required.

8. The system for printing a dealing voucher according to claim 6, wherein the format management sub-module is further configured to modify or delete the saved printing format templates as required.

9. The system for printing a dealing voucher according to any of claims 5 to 8, wherein the dealing association module comprises a dealing type management sub-module and a type association sub-module; wherein
the dealing type management sub-module is configured to manage the dealing types; and
the type association sub-module is configured to associate the dealing types with the printing format templates.

10. The system for printing a dealing voucher according to claim 9, wherein the step of managing the dealing types comprises adding, deleting and modifying the dealing types.
